# EUROPEAN PATENT SPECIFICATION

(11) **EP 4 311 105 B1**
(45) Date of publication and mention of the grant of the patent: **20.08.2025**
(21) Application number: 23181930.1
(22) Date of filing: 28.06.2023
(51) Int. Cl.: H02S 10/12, F03D 9/00

(54) **HANGING MACHINE FOR COMBINED SOLAR AND WIND ENERGY PRODUCTION**
HÄNGEMASCHINE FÜR DIE KOMBINIERTE SOLAR- UND WINDENERGIEPRODUKTION
MACHINE SUSPENDUEPOUR LA PRODUCTION COMBINÉE D'ÉNERGIE SOLAIRE ET ÉOLIENNE

(30) Priority: 18.07.2022 IT 202200015052
(43) Date of publication of application: 24.01.2024
(73) Proprietor: Illumina S.r.l., 00073 Castel Gandolfo (RM) (IT)
(72) Inventor: MODICA, Graziano, 00073 Castel Gandolfo (IT)
(74) Representative: Santi, Filippo

(56) References cited:
- WO-A1-2022/120451
- ES-A1- 2 392 912
- ANONYMOUS: "Unéole expérimente une fois de plus au CD2e | Unéole - Les éoliennes urbaines", 31 May 2021 (2021-05-31), pages 1 - 4, XP093086554, Retrieved from the Internet <URL:https://uneole.fr/uneole-experimente-une-fois-de-plus-au-cd2e/> [retrieved on 20230927]
- ANONYMOUS: "Unéole", 31 May 2021 (2021-05-31), pages 1 - 1, XP093086587, Retrieved from the Internet <URL:https://uneole.fr/articles/> [retrieved on 20230927]

## Description

The present invention relates to a hanging machine for combined solar and wind electrical energy production.

In particular, the present invention relates to a machine for combined electrical energy production by means of photovoltaic panels and wind turbines.

In recent years, in order to address the global challenge of climate change, extensive research has been conducted, most of which has focused on reducing greenhouse gas emissions and producing renewable energy through the use of higher efficiency devices and clean technologies. As is known, the photovoltaic panels or wind turbines for the production of electrical energy are simple and economical solutions to reduce energy expenditure.

In particular, solar energy has many advantages since it is inexhaustible, is an immediately available resource and can be used to generate electricity (photovoltaic) or to generate heat (solar thermal). Wind energy is the product of the transformation of the kinetic energy of the wind into electrical or mechanical energy. However, there are some resistances to positioning the turbines in some areas due to aesthetic or landscape reasons.

Given the strong interest in renewable energies, the combined use of multiple renewable energy sources, such as wind turbines combined with photovoltaic panels, is proving successful. This hybrid solution can be used for residential and industrial applications and partially solves the problem of intermittency by guaranteeing energy even at night thanks to the presence of wind turbines.

However, for the design and installation of a solar/wind hybrid plant, several parameters must be taken into account, including the positioning of the panels and of the wind turbines, which generally has a not negligible impact on the environment in which the hybrid plant is installed.

In fact, the hybrid systems currently in use involve mounting the solar panels on support beams and separately installing wind turbines on sturdy towers to keep the turbines up. This involves the use of large surfaces. ES 2 392 912 A1 discloses a truss structure comprising solar panels and wind turbines.

There is, therefore, in the specific sector the need for a hybrid solar and wind machine able to minimize the use of space in which the machine is installed.

This need is met by the machine according to the present invention which offers, moreover, further advantages that will become clear hereafter.

The solution according to the present invention fits into this context; it aims to recover soil by installing photovoltaic panels and wind turbines on a raised modular reticular structure.

Furthermore, the machine according to the present invention can be installed in areas already compromised from a landscape point of view, such as in industrial areas or large parking lots of shopping malls, where said machine could be inserted without consuming soil, as it is "suspended".

In particular, the machine according to the present invention is able to increase the ability to generate electrical energy in the *m*².

These and other results are obtained according to the present invention by proposing a solar and wind machine for the production of electrical energy.

Aim of the present invention is therefore to provide a machine that allows to exceed the limits of the machines according to the known technology and to obtain the technical results previously described.

A further aim of the invention is that said machine can be made with substantially low costs, both with regard to the production costs and with regard to the operating costs.

Not the last aim of the invention is to propose a machine that is simple, safe and reliable.

The present invention therefore relates to a machine for the contemporary production of solar and wind energy, as recited in claim 1.

In particular, according to the invention said structure may be a reticular structure.

Still according to the invention, said structure may comprise two levels of beams.

Again according to the invention, said two levels can be connected by diagonals by means of first joints, said first joints comprising six coplanar arms angled at 60° for the coupling of said beams and three diagonal arms for the coupling of said diagonals, said three diagonal arms being arranged on the same side in respect to said six coplanar arms.

Still according to the invention, said at least one wind turbine may be a vertical wind turbine.

Furthermore, according to the invention said at least one wind turbine can be fixed to said structure by means of a support.

The present invention will now be described by way of non-limiting illustration according to a preferred embodiment thereof, with particular reference to the figures in the appended drawings and the examples, wherein:
- figure 1a shows an elevational view of the machine according to the present invention,
- figure 1b shows a perspective view of the machine of figure 1a,
- figure 2a shows a top view of the machine of figure 1a,
- figure 2b shows a perspective view of the reticular structure of the machine of figure 1a, said machine comprising solar panels and wind turbines,
- figure 3 shows a perspective view of the fixing supports for fixing the wind turbine to the structure of the machine of figure 1a,
- figure 4 shows a perspective view of the reticular structure of the machine of figure 1a,
- figure 5 shows a top view of the fixing elements for fixing the solar panels to the structure of the machine of figure 1a,
- figures 6a and 6b show respectively a perspective view of the support of the pillar and of a respective containment element for containing the pillar of the structure of the machine of figure 1a, and
- figures 7a and 7b show respectively a perspective view of a first joint and of the beam of the structure of the machine of figure 1a.

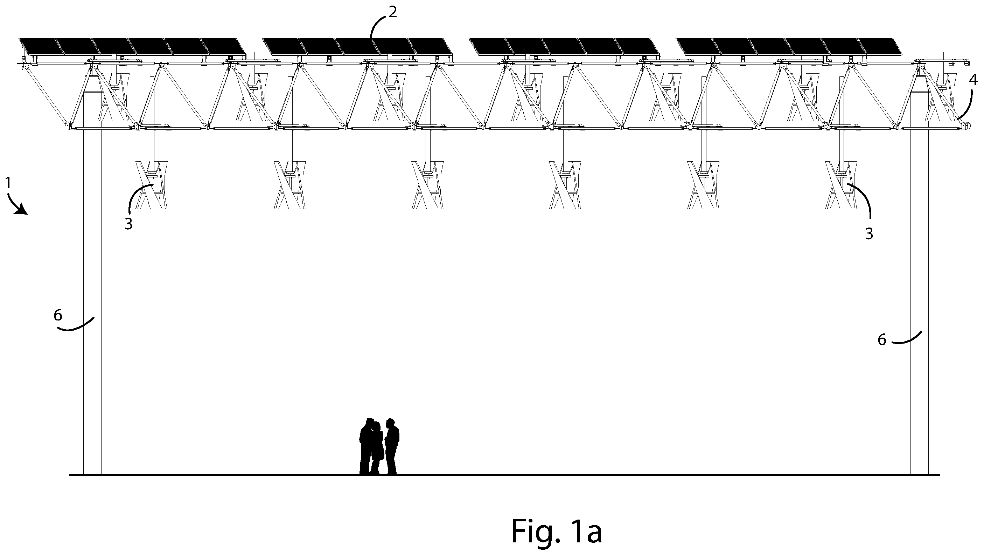

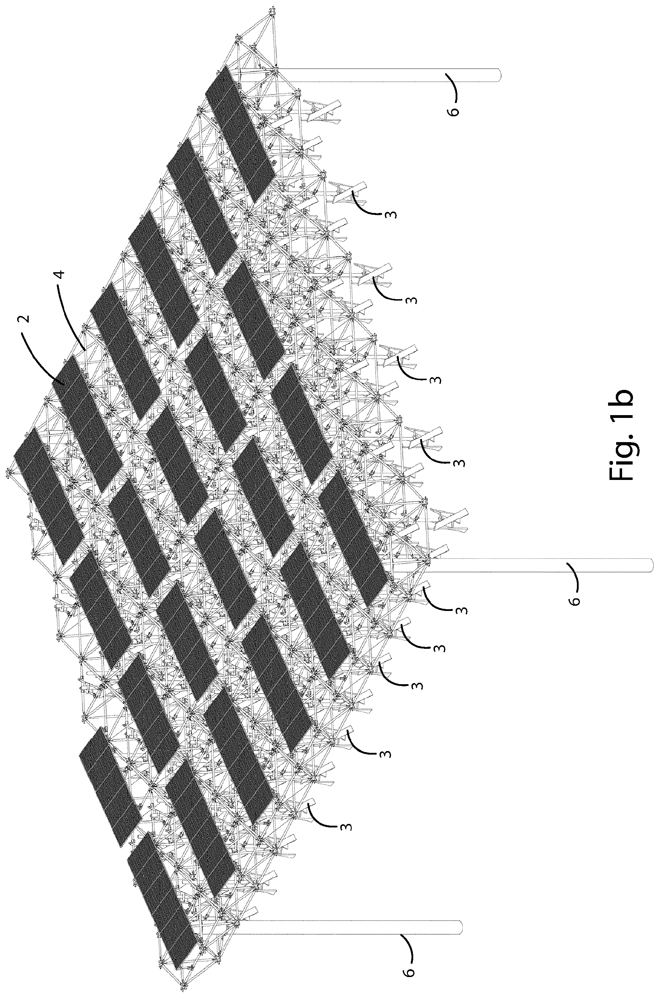

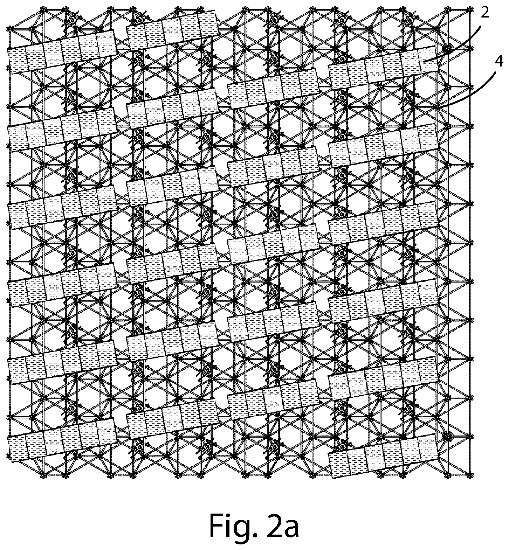

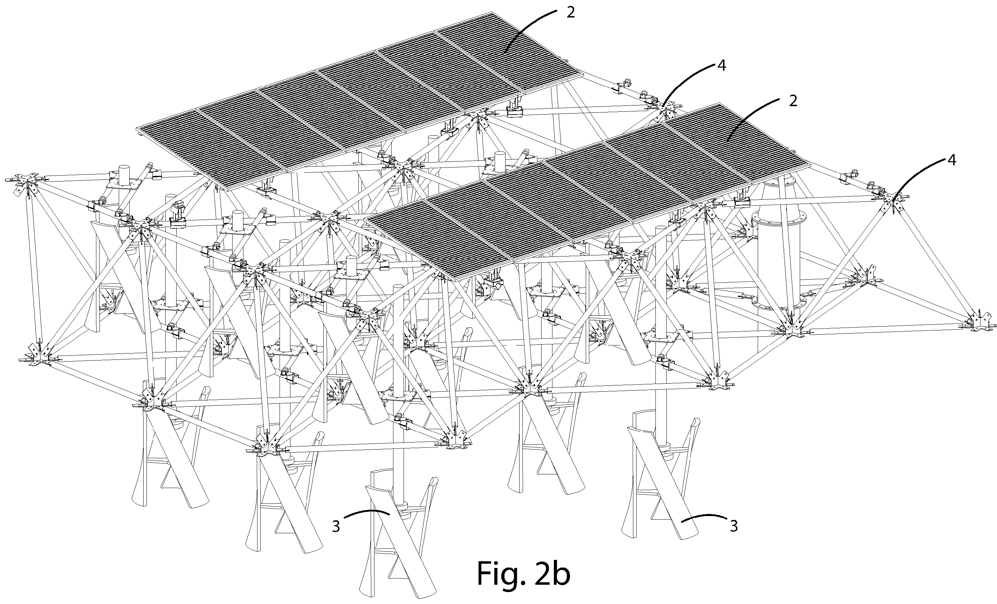

With reference to figures 1a-2b, a machine for the production of solar and wind energy indicated with the reference numeral 1, comprises at least one solar panel 2 and at least one wind turbine 3, said at least one solar panel 2 and said at least one wind turbine 3 being fixed to a raised reticular structure 4 and supported by at least four pillars 6 in such a way that said at least one wind turbine 3 is positioned inside said structure 4 and/or in the lower part of said structure 4 and said at least one solar panel 2 is positioned above said structure 4.

Said structure 4 is a raised and modular structure comprising two levels of beams 7 connected by diagonals 8, by means of nodes 10, so that it can be placed, through said pillars 6, above existing buildings or lands used for other purposes allowing to the wind turbine 3 to capture the wind and to the solar panel 2 to be completely exposed to the sun. This spatial configuration makes it possible to recover useful soil and increase the capacity of generating electrical energy in *m*².

In particular, said nodes 10 consist of first joints 10, with six coplanar arms 14 for coupling said beams 7, arranged in such a way that the angle between a coplanar arm 14 and the adjacent coplanar arm 14 is at 60° and three diagonal arms 15 for coupling said diagonals 8. In particular, said coplanar arms 14 and said diagonal arms 15 are flat. Furthermore, the terminal part of said beams 7 and of said diagonals 8 is flat such that they can be coupled respectively to said coplanar arms 14 or to said diagonal arms 15 and allow the coupling of further elements on said arms.

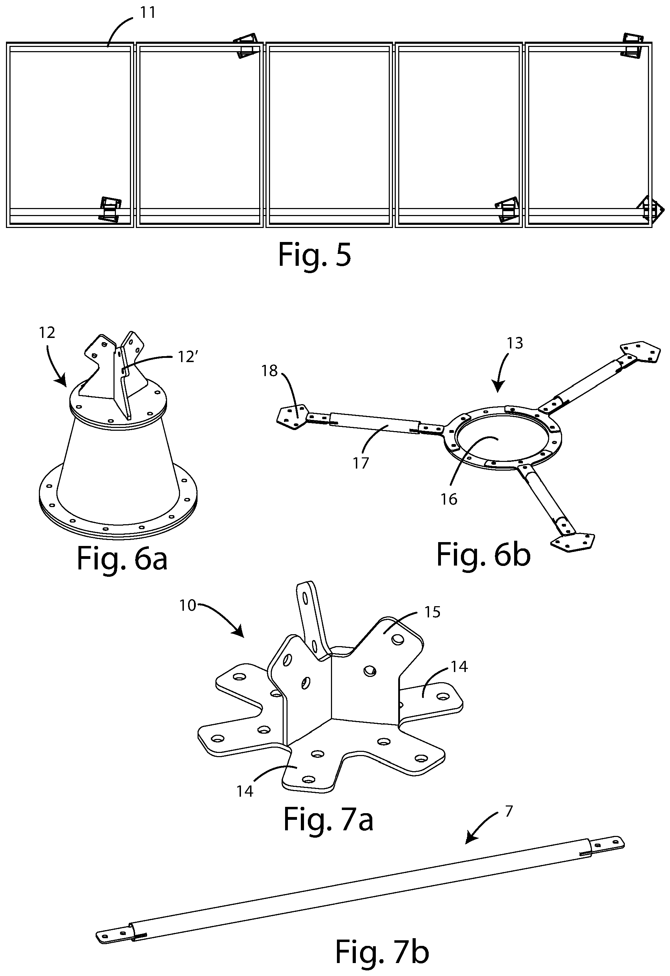

Furthermore, with reference to figure 5, said at least one solar panel 2 is coupled above said structure 4 by means of a solar panel fixing element 11. In particular, the modularity of said structure 4 and of said fixing element 11 allows to be able to couple a solar panel 2 of different sizes.

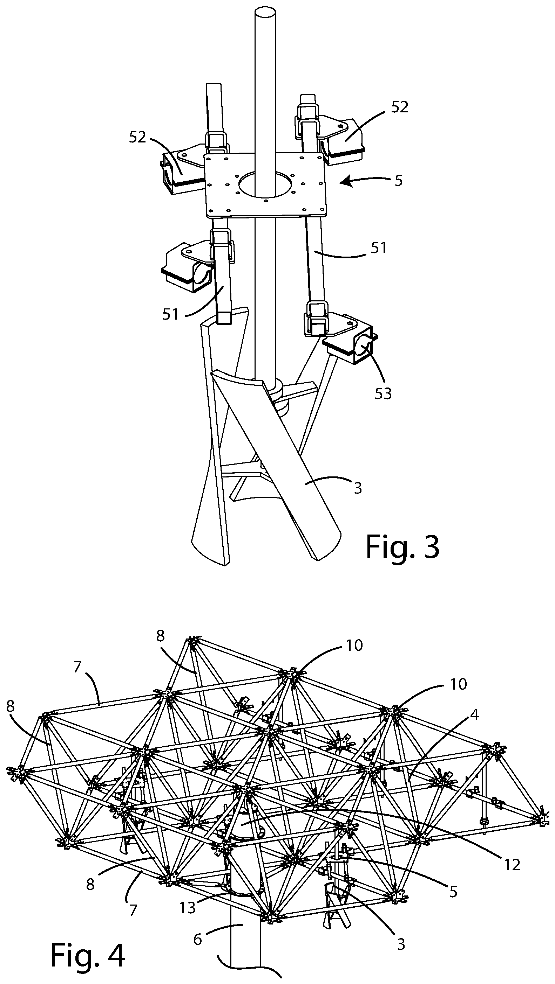

In addition, referring to the embodiment shown in figures 3 and 4, said wind turbine 3 is a wind turbine vertical thereto, i.e. having the blades arranged around a vertical axis. Said vertical turbines can rotate independently of the wind direction and can be started more easily than horizontal axis turbines.

Furthermore, referring to figure 3, said at least one wind turbine is coupled to said structure 4 via a fixing support 5 of the wind turbine 3. Said support 5 allows to fix the wind turbine 3 to the raised structure 4 without the use of additional beams or towers avoiding interruptions of the wind flow. In particular, said support 5 comprises at least one support beam 51 and at least two coupling elements 52, said coupling elements 52 being fixed to said support beam 51 and comprising a channel 53 for the passage of said beams 7 in such a way as to allow the fixing of said at least one wind turbine to said first level of beams 7.

Furthermore, said wind turbine 3 is supported by said support 5, anchored to the reticular structure 4, and may further comprise a machine for converting kinetic energy into electrical energy, not shown, directly housed in said structure 4.

Furthermore, referring to figure 6, said pillars 6 are fixed to the second level of said beams 7 by means of a support 12 of the pillar, said support 12 comprises a second joint 12' and to the first level of said beams 7 by means of a containment element 13. In particular, said containment element 13 comprises a central opening 16 adapted to allow the passage of said pillar 6 and at least three rods 17, arranged in such a way that the angle between said rods is 120°, said rods 17 comprise a flat end portion 18 adapted to be coupled in the space between two coplanar arms 14 of said first joints 10. Furthermore, said second joint 12' comprises at least three arms adapted to be fixed to the diagonal arms 15 of said first joints 10.

In addition, the machine 1 according to the present invention is adapted to comprise devices for producing green hydrogen and/or drinking water, said devices being able to exploit the energy produced by said machine 1. By way of example, said machine 1 may comprise desalters, i.e. devices for the production of drinking water, or hydrolysers or devices for the production of green hydrogen.

The present invention has been described, in an illustrative but non-limiting manner, according to preferred embodiments thereof, but it is to be understood that variations and/or modifications may be made by those skilled in the art without thereby departing from the relative scope of protection, as defined by the attached claims.

## Claims

1. Machine (1) for the contemporary production of solar and wind energy, said machine (1) comprising at least one solar panel (2) and a plurality of wind turbines (3), a raised structure (4) supported by at least four pillars (6), said plurality of wind turbines (3) comprising at least one wind turbine (3) positioned inside said structure (4) and said at least one solar panel (2) being positioned above said structure, said machine (1) being **characterised by** comprising at least one wind turbine (3) fixed to and positioned below said structure (4).

2. Machine (1) according to the preceding claim, **characterised in that** said structure (4) is a reticular structure.

3. Machine (1) according to any one of the preceding claims, **characterised in that** said structure (4) comprises two levels of beams (7).

4. Machine (1) according to the preceding claim, **characterised in that** said two levels are connected by diagonals (8) by means of first joints (10), said first joints (10) comprising six coplanar arms (14) angled at 60° for the coupling of said beams (7) and three diagonal arms (15) for the coupling of said diagonals (8), said three diagonal arms (15) being arranged on the same side in respect of said six coplanar arms (14).

5. Machine (1) according to any one of the preceding claims, **characterised in that** said at least one wind turbine (3) is a vertical axis wind turbine.

6. Machine (1) according to any one of the preceding claims, **characterized in that** said at least one wind turbine (3) inside said structure (4) and/ or said at least one wind turbine (3) below said structure (4) is fixed to said structure (4) by means of a support (5).

## Patentansprüche

1. Maschine (1) zur gleichzeitigen Erzeugung von Solar- und Windenergie, wobei die Maschine (1) mindestens ein Solarpanel (2) und eine Vielzahl von Windturbinen (3) umfasst,
eine erhöhte Struktur (4), die von mindestens vier Säulen (6) getragen wird, wobei die Vielzahl von Windturbinen (3) mindestens eine Windturbine (3) umfasst, die innerhalb der Struktur (4) positioniert ist, und das mindestens eine Solarpanel (2) oberhalb der Struktur positioniert ist, wobei die Maschine (1) **dadurch gekennzeichnet ist, dass** sie mindestens eine Windturbine (3) umfasst
die an der Struktur (4) befestigt und unter dieser angeordnet ist.

2. Maschine (1) nach dem vorhergehenden Anspruch, **dadurch gekennzeichnet, dass** die Struktur (4) eine netzartige Struktur ist.

3. Maschine (1) nach einem der vorhergehenden Ansprüche, **dadurch gekennzeichnet, dass** die Struktur (4) zwei Ebenen von Trägern (7) umfasst.

4. Maschine (1) nach dem vorhergehenden Anspruch, **dadurch gekennzeichnet, dass** die beiden Ebenen durch Diagonalen (8) mittels erster Gelenke (10) verbunden sind, wobei die ersten Gelenke (10) sechs koplanare Arme (14), die in einem Winkel von 60° angeordnet sind, für die Kopplung der Träger (7) und drei diagonale Arme (15) für die Kopplung der Diagonalen (8) umfassen, wobei die drei diagonalen Arme (15) in Bezug auf die sechs koplanaren Arme (14) auf derselben Seite angeordnet sind.

5. Maschine (1) nach einem der vorhergehenden Ansprüche, **dadurch gekennzeichnet, dass** die mindestens eine Windkraftanlage (3) eine Windkraftanlage mit vertikaler Achse ist.

6. Maschine (1) nach einem der vorstehenden Ansprüche, **dadurch gekennzeichnet, dass** die mindestens eine Windturbine (3) im Inneren der Struktur (4) und/
oder die mindestens eine Windturbine (3) unterhalb der Struktur (4) befestigt ist
mit der Struktur (4) mittels einer
Unterstützung (5).

## Revendications

1. Machine (1) pour la production contemporaine d'énergie solaire et éolienne, ladite machine (1) comprenant au moins un panneau solaire (2) et plusieurs éoliennes (3),
une structure surélevée (4) soutenue par au moins quatre piliers (6), ladite pluralité d'éoliennes (3) comprenant au moins une éolienne (3) positionnée à l'intérieur de ladite structure (4) et ledit au moins un panneau solaire (2) étant positionné au-dessus de ladite structure, ladite machine (1) étant **caractérisée par le fait qu'**elle comprend au moins une éolienne (3)
fixée et positionnée sous ladite structure (4).

2. Machine (1) selon la revendication précédente, **caractérisée par le fait que** ladite structure (4) est une structure réticulaire.

3. Machine (1) selon l'une quelconque des revendications précédentes, **caractérisée en ce que** ladite structure (4) comprend deux niveaux de poutres (7).

4. Machine (1) selon la revendication précédente, **caractérisée en ce que** lesdits deux niveaux sont reliés par des diagonales (8) au moyen de premières articulations (10), lesdites premières articulations (10) comprenant six bras coplanaires (14) inclinés à 60° pour l'accouplement desdites poutres (7) et trois bras diagonaux (15) pour l'accouplement desdites diagonales (8), lesdits trois bras diagonaux (15) étant disposés du même côté par rapport aux six bras coplanaires (14).

5. Machine (1) selon l'une quelconque des revendications précédentes, **caractérisée par le fait que** ladite au moins une éolienne (3) est une éolienne à axe vertical.

6. Machine (1) selon l'une quelconque des revendications précédentes, **caractérisée en ce que** ladite au moins une éolienne (3) se trouve à l'intérieur de ladite structure (4) et/
ou ladite au moins une éolienne (3) est fixée sous ladite structure (4)
à ladite structure (4) au moyen d'un
soutien (5).
